# EUROPÄISCHE PATENTSCHRIFT

(11) **EP 0 470 433 B1**
(45) Veröffentlichungstag und Bekanntmachung des Hinweises auf die Patenterteilung: **27.10.1993**
(21) Anmeldenummer: 91112336.2
(22) Anmeldetag: 23.07.1991
(51) Int. Cl.: F16B 39/24, F16B 43/00

(54) **Federnde Scheibe zum Sichern von Schrauben, Muttern oder dergleichen**
Spring washer for locking of screws, nuts or the like
Rondelle à ressort pour bloquer des vis, des écrous ou éléments similaires

(30) Priorität: 08.08.1990 DE 4025146
(43) Veröffentlichungstag der Anmeldung: 12.02.1992
(73) Patentinhaber: TECKENTRUP GMBH & CO. KG, D-58849 Herscheid (DE)
(72) Erfinder: Overhues, Egon, W-5982 Neuenrade (DE); Krolow, Reiner, W-5880 Lüdenscheid (DE)
(74) Vertreter: Kohlmann, Karl Friedrich, Dipl.-Ing.

(56) Entgegenhaltungen:
- DE-A- 1 400 872
- DE-B- 2 061 297
- FR-A- 2 149 727

## Beschreibung

Die Erfindung betrifft eine federnde Scheibe zum Sichern von Schrauben, Muttern oder dergleichen, mit einem äußeren und einem inneren, jeweils im wesentlichen ringförmigen Scheibenkörper sowie einem zwischen diesen Scheibenkörpern angeordneten Übergangsbereich, wobei die Scheibenkörper kegelabschnittförmig ausgebildet sind und sich zur Auflageseite der Scheibe hin öffnen, der Übergangsbereich einen geringeren Querschnitt als der jeweils angrenzende Teil des inneren und des äußeren Scheibenkörpers aufweist.

Federnde Scheiben haben die Aufgabe, Lockerungsvorgängen bei Schraubverbindungen entgegenzuwirken. Derartige Lockerungsvorgänge resultieren aus Vorspannkraftverlusten in den Schraubverbindungen, welche als Folge von Setz- und/oder Kriechvorgängen bei den miteinander verschraubten Teilen auftreten.

Um Lockerungsvorgänge zu vermeiden, müssen die federnden Scheiben über einen bestimmten Federweg eine ausreichende Federkraft aufweisen, die einen durch die Setz- und/oder Kriechvorgänge hervorgerufenen Vorspannkraftverlust soweit ausgleichen kann, daß die für die Betriebssicherheit der Schraubverbindung erforderliche Klemmkraft erhalten bleibt.

Zur Erzielung einer ausreichenden Federkraft über einen bestimmten Federweg sind bereits verschiedenste Scheibenkonstruktionen vorgeschlagen worden. Eine derartige Konstruktion offenbart beispielsweise die DE-AS 20 61 297, von der gattungsgemäß ausgegangen wird. Der zwischen den Scheibenkörpern angeordnete Übergangsbereich ist bei dieser bekannten Konstruktion als Stufe ausgebildet. Beim Anziehen der Schraubverbindung wird zuerst der äußere Scheibenkörper flach auf die Unterlage gepreßt, woraus eine Anfangsfederkraft mit bestimmtem Federweg resultiert. Beim weiteren Anziehen erfolgt die Krafteinleitung über die relativ steife Stufe, wodurch sich eine relativ hohe Federkraft bei sehr geringem Federweg ergibt. Aufgrund der Hebelwirkung der Stufe hebt sich jedoch beim weiteren Anziehvorgang der Außenrand des äußeren Scheibenkörpers von der Unterlage ab, so daß schließlich die gesamte Belastung lediglich auf dem Bereich der Federscheibe in der Umgebung der Stufe liegt. Demgemäß wird auch der Bereich der Unterlage hier am meisten belastet, was zu unerwünschten Beschädigungen der Unterlage führen kann.

Eine weitere federnde Scheibe ist aus der DE-OS 14 00 872 bekannt. Auch hier besteht der Übergangsbereich zwischen dem äußeren Scheibenkörper und dem inneren Scheibenkörper aus einer Stufe, was im wesentlichen zu denselben Problemen und Nachteilen führt wie bei der Scheibe gemäß der DE-AS 20 61 297. Um eine Lockerung des Schraubenkopfes zu verhindern, ist diese bekannte Konstruktion im Bereich des inneren Scheibenkörpers um die Öffnung für den Schraubenbolzen herum mit einer Verzahnung bzw. Riffelung versehen, die sich in das Material des Schraubenkopfes eingraben und dadurch eine zusätzliche Sicherungswirkung entfalten soll.

Um Beschädigungen der Unterlage zu vermeiden, ist es bekannt, eine Anordnung aus einer flachen, nicht federnden und eben auf liegenden Scheibe und einer auf dieser aufliegenden Federscheibe aufzubauen. Zwar ist bei einer solchen Anordnung sichergestellt, daß beim Anziehen der Schraube die untere Scheibe vollflächig auf der Unterlage aufliegt, während durch die darüber angeordnete Federscheibe die eigentliche Sicherungswirkung erzielt wird. Die Bauhöhe dieser Anordnung ist jedoch erheblich und die Sicherungswirkung aufgrund der zusätzlichen Trennfuge eingeschränkt. Auch erfordert diese bekannte Doppelscheibenanordnung einen relativ großen Materialeinsatz und führt zu Montageproblemen bei solchen Anordnungen, bei denen eine Befestigungsschraube als Einheit zusammen mit der Doppelscheibenanordnung aufgebaut werden soll.

Es ist daher die Aufgabe der Erfindung, eine federnde Scheibe zu schaffen, die ohne Beschädigung der Unterlage einen sicheren Sitz der anzuziehenden Schraube oder Mutter gewährleistet und dabei kostengünstig herzustellen und zu montieren ist.

Diese Aufgabe wird von einer federnden Scheibe der eingangs genannten Gattungen mit den Merkmalen des Kennzeichens von Anspruch 1 gelöst. Vorteilhafte Ausgestaltungen sind Gegenstand der Unteransprüche.

Bei der erfindungsgemäße Scheibe geht der äußere Scheibenkörper auf der Auflageseite der Scheibe im Übergangsbereich stetig in den inneren Scheibenkörper über und der Übergangsbereich bildet zusammen mit den angrenzenden Teilen des inneren und des äußeren Scheibenkörpers eine Rinne an der Oberseite der Scheibe.

Wird nun die mit einer erfindungsgemäß ausgestalteten federnden Scheibe ausgestattete Schraubverbindung angezogen, so wird zunächst der Umfangsbereich des äußeren Scheibenkörpers auf der Auflageseite gegen die Unterlage gepreßt. Da in dieser Phase nur geringe Federkräfte wirken, ist die Gefahr einer Beschädigung sehr gering. Um das Beschädigungsrisiko weiter herabzusetzen, kann der Außenumfangsbereich des äußeren Scheibenkörpers gemäß einer vorteilhaften Weiterbildung der Erfindung zur Vermeidung einer scharfen Kante noch abgerundet werden.

Wird die Scheibe weiter angezogen, so legt sich zunächst der äußere Scheibenkörper vollflächig auf die Unterlage auf. Wird der Anpreßdruck weiter erhöht, beginnt sich auch der innere Scheibenkörper auf die Unterlage aufzulegen, wobei aufgrund des stetigen Überganges vom äußeren Scheibenkörper zum inneren Scheibenkörper auch dieses Aufliegen kontinuierlich erfolgt, insbesondere ohne daß sich die Außenkante des äußeren Scheibenkörpers von der Unterlage abhebt. Aufgrund dieser Ausgestaltung wird auch in dieser Phase ausschließlich ein Flächendruck auf die Unterlage ausgeübt. Beim Anpressen wird die Belastung hauptsächlich vom Übergangsbereich, der aufgrund des geringeren Querschnitts einen Gelenkbereich der Scheibe darstellt, aufgenommen. Nachdem die Schraube fest angezogen ist, liegt die Scheibe vollflächig mit ihrer Auflageseite auf der Unterlage auf.

Im Bereich des inneren Scheibenkörpers treten dabei höhere Federkräfte auf als bei vergleichbaren Spannscheiben der bekannten Art. Daher kann im Vergleich zu bekannten Scheiben die Materialdicke reduziert werden, was sich positiv auf die Materialkosten auswirkt.

Ein besonderer Vorteil der erfindungsgemäßen federnden Scheibe ist die Größe der Federkraft, die im Vergleich zu bekannten Spannscheibenkonstruktionen bis zu 20% höhere Werte aufweist. Ein besonderer Vorteil der erfindungsgemäßen federnden Scheibe ist es ferner, daß ein gegenüber herkömmlichen Konstruktionen um bis zu 80% höherer Federweg erzielt wird. Insofern erbringen erfindungsgemäße Scheibenkonstruktionen sogar noch dann ausgezeichnete Werte, wenn der in der DIN vorgeschriebene Entlastungswert von 20 um überschritten wird.

Versuche haben ergeben, daß die Be- und Entlastungskennlinien bei Scheibenkonstruktionen der erfindungsgemäßen Art weitgehend gleichmäßig verlaufen, so daß nahezu keine Hystereseeffekte auftreten.

Aufgrund des einteiligen Aufbaues haben Scheibenkonstruktionen der bekannten Art eine erheblich geringere Bauhöhe als die sogenannten bekannten "Doppelscheibenanordnungen". Auch ist die Montage im Falle des Zusammenfügens mit einer Schraube zu einer Einheit zwangsläufig erheblich einfacher.

Da erfindungsgemäß der Übergangsbereich zusammen mit den angrenzenden Teilen des inneren und des äußeren Scheibenkörpers von der Rinne an der Oberseite der Scheibe gebildet wird, kann das Stauchen des Übergangsbereiches im wesentlichen so erfolgen, daß keine Kräfte von den angrenzenden Teilen der Scheibenkörper aufgenommen werden müssen.

Die Rinne kann auf unterschiedlichste Weise gestaltet werden. Beispielsweise kann sie einen Kreisring bilden, der konzentrisch mit der Öffnung des inneren Scheibenkörpers ist, durch die eine Schraube oder dergl. geführt wird. Es ist auch denkbar, daß die Rinne eine geschlossene Rosettenlinie bildet, die beispielsweise vier oder acht Blätter aufweist. Auch andere Ausformungen der Rinne sind möglich, wenn nur gewährleistet ist, daß beim Anziehen der Schraube der Preßdruck auf geeignete Weise aufgenommen und die bereits beschriebene Gelenkwirkung erzielt wird.

Während der Umriß des inneren Scheibenkörpers wesentlich von der Art der Ausbildung der Rinne geprägt wird, weiterhin auch von dem erforderlichen Innendurchmesser der Öffnung für die hindurchzuführende Schraube, kann der Außenumriß des äußeren Scheibenkörpers weitgehend frei gewählt und den durch die Umgebung vorgegebenen Bedingungen angepaßt werden. So kann der Außenumriß beispielsweise einen Polygonzug bilden, der beim Anziehen der Schraube an für diesen Zweck vorgesehene Anschläge stößt, wodurch verhindert wird, daß die Scheibe sich während der Anziehbewegung der Schraube mitbewegt. Der Polygonzug kann ein Quadrat sein, es ist aber auch denkbar, daß der Außenumriß ein Rechteck bildet. Oftmals wird es angebracht sein, daß der Außenumriß einen Kreis oder ein Oval bildet.

In einer bevorzugten Ausführungsform ist der Kegelöffnungswinkel des äußeren Scheibenkörpers größer als derjenige des inneren Scheibenkörpers. Durch den Kegelöffnungswinkel kann jeweils die wirksame Federkraft festgelegt werden.

Der innere Scheibenkörper kann auf der der Auflageseite gegenüberliegenden Oberseite im innenliegenden Umfangsbereich profiliert sein, beispielsweise durch eine Kordierung, so daß hiermit eine zusätzliche Sicherung gegen Losdrehen gegeben ist.

Im folgenden wird die Erfindung lediglich beispielhaft anhand der Zeichnung beschrieben. Es zeigt:
- Fig. 1: einen Querschnitt in radialer Richtung einer federnden Scheibe gemäß der vorliegenden Erfindung,
- Fig. 2: eine Draufsicht auf die Scheibe gemäß Fig. 1,
- Fig. 3: einen Querschnitt in radialer Richtung einer weiteren Ausführungsform der vorliegenden Erfindung,
- Fig. 4: zeigt einen Querschnitt in radialer Richtung einer dritten Ausführungsform der vorliegenden Erfindung,
- Fig. 5 und 6: zeigen eine federnde Scheibe gemäß den Fig. 1 und 2 im teilweise angezogenen Zustand (Fig. 5) und im vollständig angezogenen Zustand (Fig. 6).
- Fig. 7a, 7b und 7c: zeigen verschiedene weitere Ausgestaltungen einer federnden Scheibe gemäß der vorliegenden Erfindung.

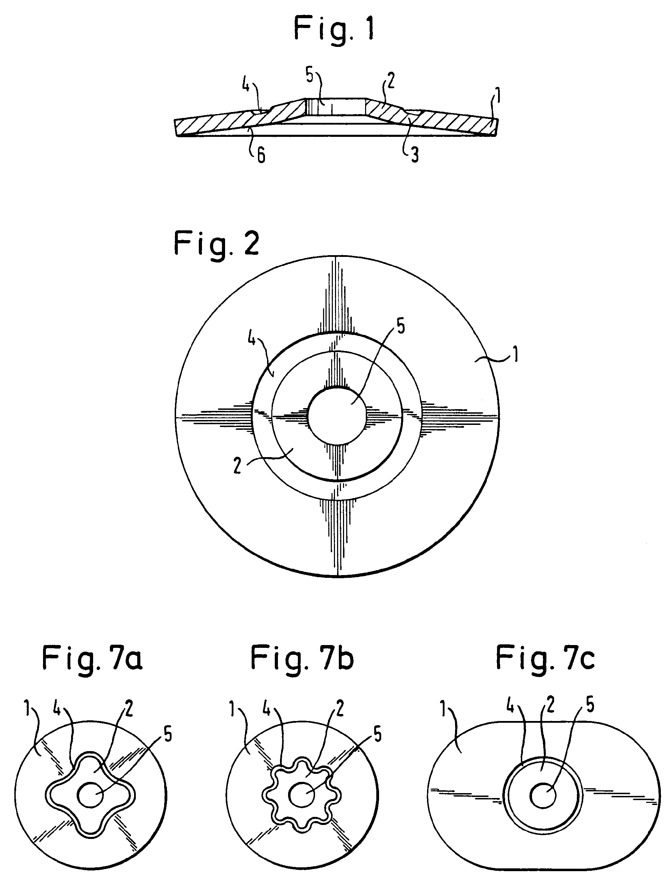

Fig. 1 zeigt den Querschnitt in radialer Richtung einer federnden Scheibe, die einen äußeren Scheibenkörper 1, einen inneren Scheibenkörper 2 und einen zwischen diesen vorgesehenen Übergangsbereich 3 aufweist. Die beiden Scheibenkörper 1, 2 sind jeweils kegelabschnittförmig ausgestaltet, sie öffnen sich zur Auflageseite der Scheiben. Der Übergangsbereich 3 ist im Querschnitt geringer als der jeweils angrenzende Teil des äußeren 1 bzw. inneren 2 Scheibenkörpers. Bei dieser Ausführungsform der Erfindung wird dies dadurch erreicht, daß der Übergangsbereich 3 zusammen mit den angrenzenden Teilen des äußeren 1 und des inneren 2 Scheibenkörpers eine Rinne 4 bildet. Es ist der Kegelöffnungswinkel des äußeren Scheibenkörpers 1 größer als derjenige des inneren Scheibenkörpers 2, das heißt, der Anstellwinkel des äußeren Scheibenkörpers 1 gegenüber der Unterlage ist kleiner als der des inneren Scheibenkörpers 2. Der innere Scheibenkörper 2 umschließt eine zentrale Öffnung 5, durch die eine Schraube, ein Bolzen oder dergleichen geführt wird.

Fig. 2 zeigt die Draufsicht der federnden Scheibe gemäß Fig. 1. Der innere Scheibenkörper 2, die Rinne 4 und der äußere Scheibenkörper 1 sind konzentrisch um die zentrale Öffnung 5 angeordnet.

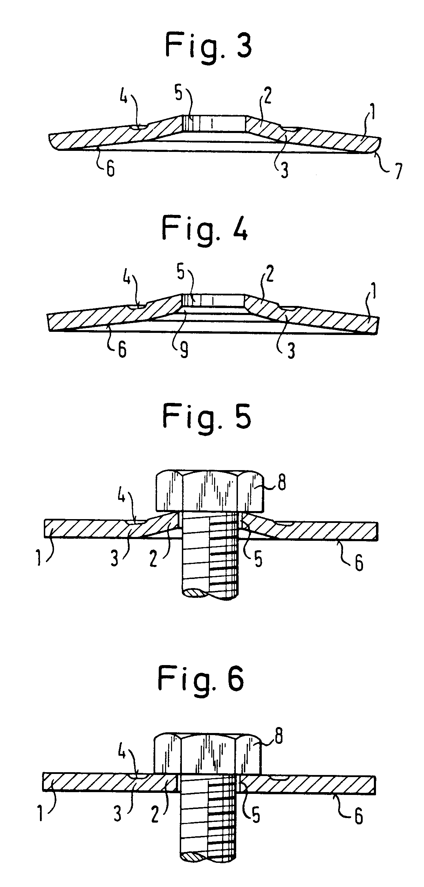

Fig. 3 zeigt eine weitere Ausführungsform der vorliegenden Erfindung, bei der der Außenumfangsbereich 7 des äußeren Scheibenkörpers 1 an der Auflageseite 6 abgerundet ist. Zu Beginn des Anziehens der durch die Öffnung 5 geführten Schraube kann der äußere Scheibenbereich 1 daher sozusagen auf der Unterlage abrollen, so daß Beschädigungen in diesem Bereich weitgehend vermieden werden.

Die in Fig. 4 dargestellte dritte Ausführungsform einer erfindungsgemäßen Scheibe entspricht im wesentlichen der Ausführungsform nach den Fig. 1 und 2. Um die Scheibe jedoch als sogenanntes Kombi-Teil einzusetzen, ist die zentrale Öffnung 5 auf der der Unterlage zugewandten Seite mit einer Phase 9 ausgestattet.

Fig. 5 und 6 zeigen eine federnde Scheibe gemäß der vorliegenden Erfindung beim Anziehvorgang mittels einer Schraube 8 in zwei Phasen. In der ersten Phase des Anziehvorganges wird zunächst der äußere Scheibenbereich ein von der Außenseite mehr und mehr an die Unterlage angepreßt, bis die in Fig. 5 dargestellte Stellung erreicht ist, in der der äußere Scheibenbereich 1 vollständig auf der Unterlage aufliegt, während der innere Scheibenbereich 2 mit seiner Auflagefläche 6 noch einen Winkel gegenüber der Unterlage einschließt.

Wird die Schraube 8 im Anschluß daran weiter angezogen, so wird der Übergangsbereich 3 gestaucht und der innere Scheibenbereich 2 in zunehmendem Maße an die Unterlage angepreßt, bis die in Fig. 6 dargestellte Phase erreicht ist. In dieser Phase liegen dann sowohl der äußere Scheibenbereich 1 als auch der innere Scheibenbereich 2 flächig auf der Unterlage auf.

Die Fig. 7a, 7b und 7c zeigen verschiedene weitere Ausführungsformen der federnden Scheibe gemäß der vorliegenden Erfindung. In Fig. 7a ist die Rinne 4 rosettenförmig ausgebildet, wobei die Rosette vier Blätter aufweist, die symmetrisch um die zentrale Öffnung 5 angeordnet sind. Der Außenumfang des äußeren Scheibenkörpers ist kreisförmig, die Abmessungen und die Ausformung des inneren Scheibenkörpers 2 ist durch die Ausführung der Rinne 4 bzw. durch diejenige der zentralen Öffnung 5 bestimmt. Dasselbe gilt für die Ausführungsform gemäß der Fig. 7b, bei der die Rinne 4 aus einer Rosette mit acht Blättern gebildet ist. Fig. 7c zeigt eine Ausführungsform, bei der der Außenumfang des äußeren Scheibenkörpers 1 oval ist. Die Rinne 4 ist konzentrisch zur zentralen Öffnung 5 ausgebildet.

Es sind weitere Ausgestaltungen des Übergangsbereiches bzw., damit verbunden, des inneren und äußeren Scheibenkörpers möglich, die dem jeweiligen Anwendungszweck bzw. den jeweiligen Bedingungen entsprechend geformt und gestaltet sein können.

## Patentansprüche

1. Federnde Scheibe zum Sichern von Schrauben, Muttern oder dergleichen, mit einem äußeren und einem inneren, jeweils im wesentlichen ringförmigen Scheibenkörper sowie einem zwischen diesen Scheibenkörpern angeordneten Übergangsbereich, wobei die Scheibenkörper kegelabschnittförmig ausgebildet sind und sich zur Auflageseite der Scheibe hin öffnen, wobei der Übergangsbereich einen geringeren Querschnitt als der jeweils angrenzende Teil des inneren und des äußeren Scheibenkörpers aufweist,
dadurch **gekennzeichnet,** daß
der äußere Scheibenkörper (1) auf der Auflageseite (6) der Scheibe im Übergangsbereich (3) stetig in den inneren Scheibenkörper (2) übergeht, wobei der Übergangsbereich (3) zusammen mit den angrenzenden Teilen des inneren (2) und des äußeren (1) Scheibenkörpers eine Rinne (4) an der Oberseite der Scheibe bildet.

2. Scheibe nach Anspruch 1, dadurch gekennzeichnet, daß die Rinne (4) eine geschlossene Rosettenlinie bildet.

3. Scheibe nach einem der Ansprüche 1 oder 2, dadurch gekennzeichnet, daß der Außenumfangsbereich (7) des äußeren Scheibenkörpers (1) an der Auflageseite (6) abgerundet ist.

4. Scheibe nach einem der Ansprüche 1 bis 3, dadurch gekennzeichnet, daß der Außenumriß des äußeren Scheibenkörpers (1) einen Polygonzug bildet.

5. Scheibe nach Anspruch 4, dadurch gekennzeichnet, daß der Außenumriß des äußeren Scheibenkörpers (1) ein Rechteck bildet.

6. Scheibe nach einem der Ansprüche 1 bis 3, dadurch gekennzeichnet, daß der Außenumriß des äußeren Scheibenkörpers (1) einen Kreis oder ein Oval bildet.

7. Scheibe nach einem der Ansprüche 1 bis 6, dadurch gekennzeichnet, daß der Kegelöffnungswinkel des äußeren Scheibenkörpers (1) größer ist als derjenige des inneren Scheibenkörpers (2).

8. Scheibe nach einem der Ansprüche 1 bis 6, dadurch gekennzeichnet, daß der Kegelöffnungswinkel des äußeren Scheibenkörpers (1) gleich groß oder kleiner ist als derjenige des inneren Scheibenkörpers (2).

9. Scheibe nach einem der Ansprüche 1 bis 7, dadurch gekennzeichnet, daß der innere Scheibenkörper (2) auf der der Auflageseite (6) gegenüberliegenden Oberseite im innenliegenden Umfangsbereich profiliert ist.

10. Scheibe nach einem der Ansprüche 1 bis 9, dadurch gekennzeichnet, daß die Stärke des inneren Scheibenkörpers (2) und des äußeren Scheibenkörpers (1) gleich sind.

11. Scheibe nach einem der Ansprüche 1 bis 9, dadurch gekennzeichnet, daß die Stärke des inneren Scheibenkörpers (2) geringer ist als die Stärke des äußeren Scheibenkörpers (1).

12. Scheibe nach einem der Ansprüche 1 bis 9, dadurch gekennzeichnet, daß die Stärke des inneren Scheibenkörpers (2) größer ist als die Stärke des äußeren Scheibenkörpers (1).

13. Scheibe nach einem der Ansprüche 1 bis 12, dadurch gekennzeichnet, daß der innere Scheibenkörper (2) im Bereich der Innenkante seiner Auflageseite (6) mit einer Phase (9) ausgestattet ist.

## Claims

1. Spring washer for securing bolts, nuts or the like, with outer and inner washer bodies, in each case essentially annular, as well as a transition region arranged between these washer bodies, wherein the washer bodies have the shape of a cone section and open towards the supported side of the washer, wherein the transition region has a smaller cross-section than the respectively adjoining portion of the inner and outer washer bodies, characterised in that the outer washer body (1) constantly merges with the inner washer body (2) on the supported side (6) of the washer in the transition region (3), wherein the transition region (3) forms together with the adjoining portions of the inner (2) and outer (1) washer bodies a channel (4) in the upper side of the washer.

2. Washer according to claim 1, characterised in that the channel (4) forms a closed rosette line.

3. Washer according to either of claims 1 or 2, characterised in that the outer circumferential region (7) of the outer washer body (1) is rounded on the supported side (6).

4. Washer according to any of claims 1 to 3, characterised in that the outer contour of the outer washer body (1) forms a polygonal course.

5. Washer according to claim 4, characterised in that the outer contour of the outer washer body (1) forms a rectangle.

6. Washer according to any of claims 1 to 3, characterised in that the outer contour of the outer washer body (1) forms a circle or an oval.

7. Washer according to any of claims 1 to 6, characterised in that the cone angle of the outer washer body (1) is larger than that of the inner washer body (2).

8. Washer according to any of claims 1 to 6, characterised in that the cone angle of the outer washer body (1) is equal to or smaller than that of the inner washer body (2).

9. Washer according to any of claims 1 to 7, characterised in that the inner washer body (2) is profiled on the upper side opposite the supported side (6), in the inner circumferential region.

10. Washer according to any of claims 1 to 9, characterised in that the thickness of the inner washer body (2) and of the outer washer body (1) is the same.

11. Washer according to any of claims 1 to 9, characterised in that the thickness of the inner washer body (2) is smaller than the thickness of the outer washer body (1).

12. Washer according to any of claims 1 to 9, characterised in that the thickness of the inner washer body (2) is greater than the thickness of the outer washer body (1).

13. Washer according to any of claims 1 to 12, characterised in that the inner washer body (2) is provided with a chamfer (9) in the region of the inner edge of its supported side (6).

## Revendications

1. Rondelle élastique, pour bloquer des vis, écrous ou analogues, avec un corps de rondelle extérieur et un corps de rondelle intérieur, chacun sensiblement annulaire, ainsi qu'une zone de transition, disposée entre ces corps de rondelle, les corps de rondelle étant réalisés tronconiques et s'ouvrant en direction de la face d'appui de la rondelle, la zone de transition présentant une section transversale plus petite que l'autre partie, limitrophe, du corps de rondelle intérieur et extérieur, caractérisée en ce que le corps de rondelle extérieur (1) passe , du coté de la face d'appui (6) de la rondelle, dans la zone de transition (3), de façon continue, dans le corps de rondelle intérieur (2), la zone de transition (3) avec les parties limitrophes des corps de rondelle intérieur (2) et extérieur (1) formant une goulotte (4) sur la face supérieure de la rondelle.

2. Rondelle selon la revendication 1, caractérisée en ce que la goulotte (4) forme une ligne en rosace fermée.

3. Rondelle selon l'une des revendications 1 ou 2, caractérisée en ce que la zone périphérique extérieure (7) du corps de rondelle extérieur (1) est arrondie du coté de l'appui (6).

4. Rondelle selon l'une des revendications 1 à 3, caractérisée en ce que le contour extérieur du corps de rondelle extérieur (1) forme un tracé polygonal.

5. Rondelle selon la revendication 4, caractérisée en ce que la contour extérieur du corps de rondelle extérieur (1) forme un rectangle.

6. Rondelle selon l'une des revendications 1 à 3, caractérisé en ce que le contour extérieur du corps de rondelle extérieur (1) forme un cercle ou un ovale.

7. Rondelle selon l'une des revendications 1 à 6, caractérisé en ce que l'angle d'ouverture du cône du corps de rondelle extérieur (1) est supérieur à celui du corps de rondelle intérieur (2).

8. Rondelle selon l'une des revendications 1 à 6, caractérisé en ce que l'angle d'ouverture du cône du corps de rondelle extérieur (1) est égal ou inférieur à celui du corps de rondelle intérieur (2).

9. Rondelle selon l'une des revendications 1 à 7, caractérisé en ce que le corps de rondelle intérieur (2) est profilé, sur la face supérieure opposée à la face d'appui (6), dans la zone périphérique intérieure.

10. Rondelle selon l'une des revendications 1 à 9, caractérisé en ce que l'épaisseur du corps de rondelle intérieur (2) et celle du corps de rondelle extérieur (1) sont égales.

11. Rondelle selon l'une des revendications 1 à 9, caractérisé en ce que l'épaisseur du corps de rondelle intérieur (2) est inférieure à celle du corps de rondelle extérieur (1).

12. Rondelle selon l'une des revendications 1 à 9, caractérisé en ce que l'épaisseur du corps de rondelle intérieur (2) est supérieure à celle du corps de rondelle extérieur (1).

13. Rondelle selon l'une des revendications 1 à 12, caractérisé en ce que le corps de rondelle intérieur (2) est équipé d'un chanfrein (9), dans la zone de l'arête intérieure de sa face d'appui (6).
